# EUROPEAN PATENT APPLICATION

(11) **EP 2 357 514 A1**
(43) Date of publication of application: **17.08.2011**
(21) Application number: 10195975.7
(22) Date of filing: 20.12.2010
(51) Int. Cl.: G02F 1/133

(54) **Liquid crystal device with embedded element and its design method**

(30) Priority: 21.12.2009 TW 98143858
(71) Applicant: Integrated Digital Technologies, Inc., Hsinchu Science Park T'ai pei (TW)
(72) Inventor: Li, Heng-Hsien, Hsinchu Science Park (TW); Wang, Ming-Tsung, Hsinchu Science Park (TW); Chang, Yang-Hui, Hsinchu Science Park (TW); Liaw, Shen-Tai, 300, East Dist., Hsinchu City (TW); Hwang, Naejye, Hsinchu Science Park (TW)
(74) Representative: 2K Patentanwälte Blasberg Kewitz & Reichel

(57) **Abstract**

A design method for determining the area ratio's of three colored sub pixels (312,314,316;412,414,416) of pixels (318,418) in a liquid crystal panel to improve color performance, i.e. white point chromaticity, and brightness performance, if the area of the green (G) subpixel (314;414) is larger than the area of each of the two (R,B) other colored subpixels (312,316;412,416) The pixels include also an embedded element (306,408) for use as a touch panel.

## Description

### BACKGROUND OF THE INVENTION

### Field of the Invention

The present invention generally relates to a sub-pixel area layout of a liquid crystal device. More particularly, the present invention relates to a liquid crystal device with embedded element and a method for producing thereof including a design method.

### Description of the Related Art

Touch panels can be used in portable products and are particularly suitable for human operation. Thus, touch panels are widely used in various electronic products, comprising personal digital assistants (PDA), palm sized PC, cellular phones, hand-write inputting device, information appliances, automated teller machines (ATM) and point of sales (POS). Portable communication and consumer electronic products are developing rapidly and touch panels are widely used in these products. Therefore, many companies join in co-development of technologies which relate to touch panels.

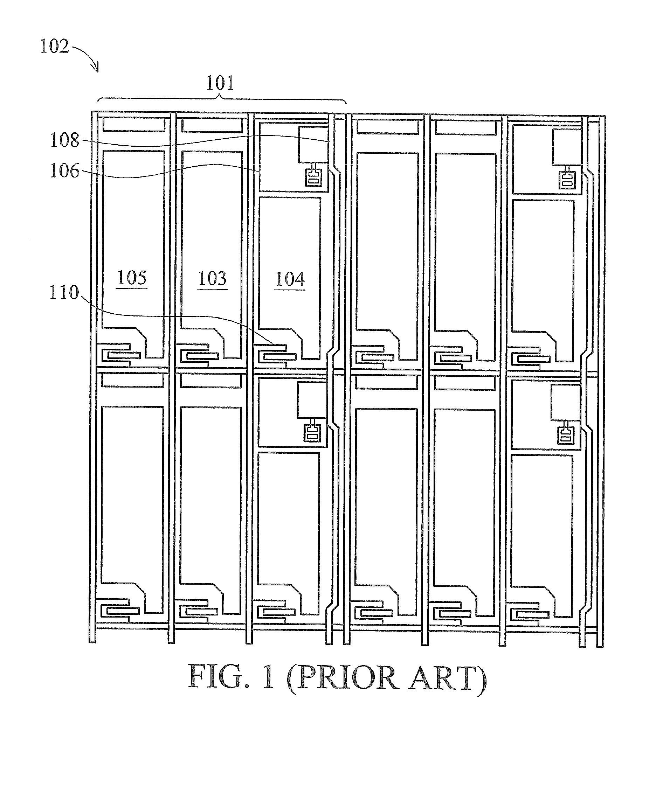

FIG. 1 shows a top view of an active device substrate according to one conventional touch panel. Compared to the liquid crystal devices without touch-sensing function, the sub pixel 104 of a touch panel 102 includes additional sensing element 106 and readout line 108 in addition to transistor 110 for switching pixel. The sensing element 106 and readout line 108 acting as a sensing device in the touch panel would occupy a part area of the sub pixel 104, which makes the aperture ratio of the sub pixel 104 smaller than the other sub pixels 103 and 105 existed in a pixel 101. Briefly, the sub pixel will have lower brightness when the sensing element 106 formed therein, resulting in shifting the white point chromaticity of the touch panel.

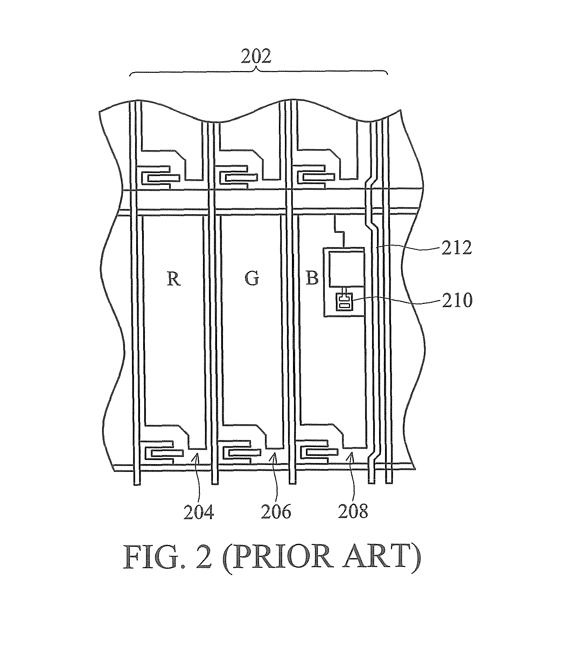

Certain touch panel provides a method for distributing sub-pixel area to resolve the aforementioned drawbacks of resultant color shift. FIG. 2 is a top view of an active device substrate of a conventional embedded touch panel, wherein the pixel 202 comprises a red sub pixel 204, a green sub pixel 206 and a blue sub pixel 208. An embedded thin film transistor 210 and a readout line 212 occupying a part of sub-pixel area 208 reduce the aperture ratio of the sub pixel 208, and cause brightness loss and white point chromaticity shift issues. Therefore, the conventional embedded touch panel of FIG. 2 adjusts the sub-pixel area to reduce aperture ratio loss caused from the touch-sensing thin film transistors and readout lines embedded therein when designing pixel layout to form scan lines and signal lines. Then, the remaining pixel area is equally distributed to the red sub pixel (R) 204, the green sub pixel (G) 206 and the blue sub pixel (B) 208. After redistributing the size of the sub pixel area, each sub pixel has the same aperture ratio to prevent white distortion issue in view of equal sub-pixel area of the embedded touch panel, such that chromaticity shift need not to be compensated by adjusting the chromaticity coordinate. The white distortion issue is solved according to the designing method of FIG. 2, but brightness of the conventional embedded touch panel is seriously decreased. For example, one-sixth of the pixel area 202 is occupied by the embedded thin film transistor 210 and the readout line 212, and the remaining pixel area is equally divided by red sub pixels 204, green sub pixels 206 and blue sub pixels 208, the embedded touch panel of FIG.2 only has 87% of the brightness level of liquid crystal panel without embedded thin film transistors and readout lines.

Accordingly, a novel design of liquid crystal devices including an embedded element is required to overcome the above white distortion and minimize brightness reduction issues for this embedded touch panel.

### BRIEF OF INVENTION

It is an object of the present invention to provide a novel liquid crystal device with an embedded element and a method for producing thereof enabling to overcome the above white distortion and minimize brightness reduction issues for this embedded touch panel.

This problem is solved by a liquid crystal device with an embedded element according to claim 1 and by a method for producing thereof according to claim 10. Further advantageous embodiments are the subject-matter of the dependent claims.

According to the present invention when designing the liquid crystal panel with an embedded element, for efficient integrating the embedded device into the liquid crystal panel, an adjustable backlight spectrum range is provided and the area ratio of sub pixels occupied by an embedded element in a liquid crystal panel are designed according to the adjustable backlight spectrum range.

The invention further comprises a liquid crystal panel device with an embedded device, comprising a pixel comprising at least three sub pixels, wherein the sub pixels comprises a first sub pixel, a second sub pixel and a third sub pixel. In order to efficient integrating an embedded element into the liquid crystal panel , an area of the sub pixels occupied by the embedded element is A, wherein an area of the first sub pixel occupied by the embedded element is A₁, an area of the second sub pixel occupied by the embedded element is A₂, an area of the third sub pixel occupied by the embedded element is A₃, sum of A₁, A₂ and A₃ equals A, and at least two of A₁, A₂ and A₃ are not zero.

The invention yet further comprises a liquid crystal panel device with an embedded device, comprising a first sub pixel, a second sub pixel and a third sub pixel, wherein each of which displays light with different wavelength, and has different size. The invention yet further provides a method for manufacturing a liquid crystal device or panel with an embedded element, including an efficient integration of the embedded device into the liquid crystal panel, wherein the liquid crystal panel is essentially consisted of (or essentially comprises) a plurality of pixels and the pixel includes at least three sub pixels in which has different color comprising (a) providing an adjustable backlight spectrum range; (b) determining an area ratio of respective sub pixels occupied by an embedded element in each pixel according to a specific backlight spectrum; (c) calculating a white chromaticity coordinate of the liquid crystal panel and a deviation between the white chromaticity coordinate and a target chromaticity coordinate; (d) conforming the deviation is under a tolerant (tolerable or acceptable) limit; and (e) configuring the embedded element in each pixel in response to the area ratio and the specific backlight spectrum.

### BRIEF DESCRIPTION OF DRAWINGS

The invention can be more fully understood by reading the subsequent detailed description and examples with references made to the accompanying drawings, wherein,
FIG. 1 shows a top view of an active device substrate of a touch liquid crystal device of a conventional art.
FIG. 2 shows a top view of an active device substrate of a light sensitive touch liquid crystal device of another conventional art.
FIG. 3A shows a top view of a liquid crystal panel including embedded elements of a first embodiment of the invention.
FIG. 3B is a schematic cross-sectional view of an embedded touch panel of the present invention.
FIG. 4 shows a top view of a liquid crystal panel including embedded elements of a second embodiment of the invention.
FIG. 5 shows a flow chart of a method for designing an embedded touch panel of the invention.

### DETAILED DESCRIPTION OF INVENTION

Preferred embodiments of the present invention will now be described in detail with reference to the accompanying drawings.

Throughout the specification, reference to "embedded touch panel" means that a display panel with embedded elements compatible with, attached to, or formed as a component of host and an optional device. The embedded elements capable of detecting various characteristics of the inputs provided by one or more input devices, including their locations and timings. In one embodiment, the embedded element can detect at least one characteristics of the electromagnetic wave including wavelength, pulse frequency, durations, timing, intensity, modulation scheme, input patterns, temperature and size. Input devices, may provide inputs to liquid crystal device embedded with the above elements, such as optically or in the form of energy beams. Energy beams may include beams in the form of infrared, invisible, or visible light. In some examples, the embedded elements comprising all members for achieving the function of embedded elements, such as a readout line.

The present invention provides a method for designing an embedded touch panel which remains the white point chromaticity at a standard color coordinate even though embedded devices and readout lines occupy partial sub-pixel area, and then minimizes the transmissible loss (as well as the brightness loss) resulted from occupancy of the embedded devices and the readout lines.

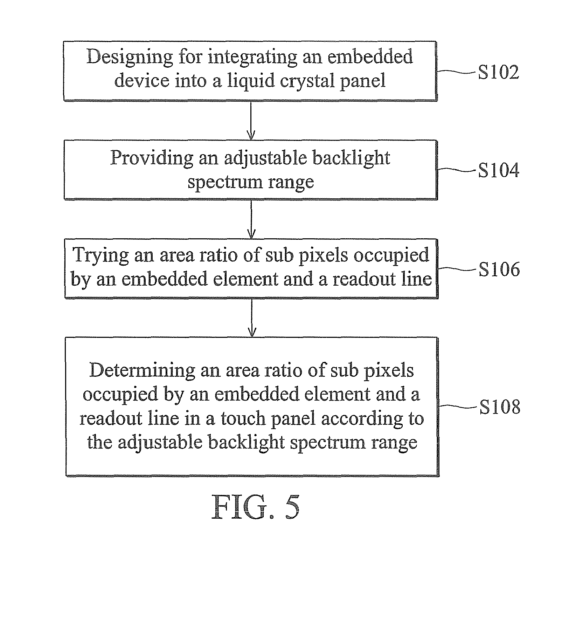

FIG. 5 shows a flow chart of a designing method for an embedded touch panel. In step S102, a liquid crystal panel with embedded elements is provided, wherein an embedded element is disposed in a pixel region consisted of at least three sub pixels comprising a first sub pixel, a second sub pixel and a third sub pixel. In one embodiment, the first sub pixel is red, the second sub pixel is green and the third sub pixel is blue, but not limited thereto. In step S104, an adjustable backlight spectrum range is provided, which may vary based on material composition and characteristics of the light source in the liquid crystal panel. Taking the chromaticity point (0.311, 0.294) of a backlight spectrum as a criterion and using the following experimental examples and comparative examples as embodiments, the chromaticity coordinate of corresponding backlight spectrum are shown in Table 1. Next, the pixel region occupied by an embedded element and a readout line is determined, in step S106, wherein the occupied area can be referred to as the inlet region in the below description. The embedded element can be any functional unit embedded in pixel region of a liquid crystal panel, such as light sensitive elements or pressure sensitive elements etc. And the embedded element further comprises a control element, like a switch element for light sensing element, which is related to the functional unit in terms of design aspect. Finally, taking account of the principle which minimizes brightness loss and white point chromaticity shift, the each area ratio of the inlet region in the first sub pixel, the second sub pixel and the third sub pixel is achieved by modulating the size of each sub pixel based on the adjustable backlight spectrum range (in step 108). On the contrary, if the area ratio of the inlet region cannot be changed, the desired backlight spectrum range could be calculated according to the fixed size of the red, green and blue sub pixels.

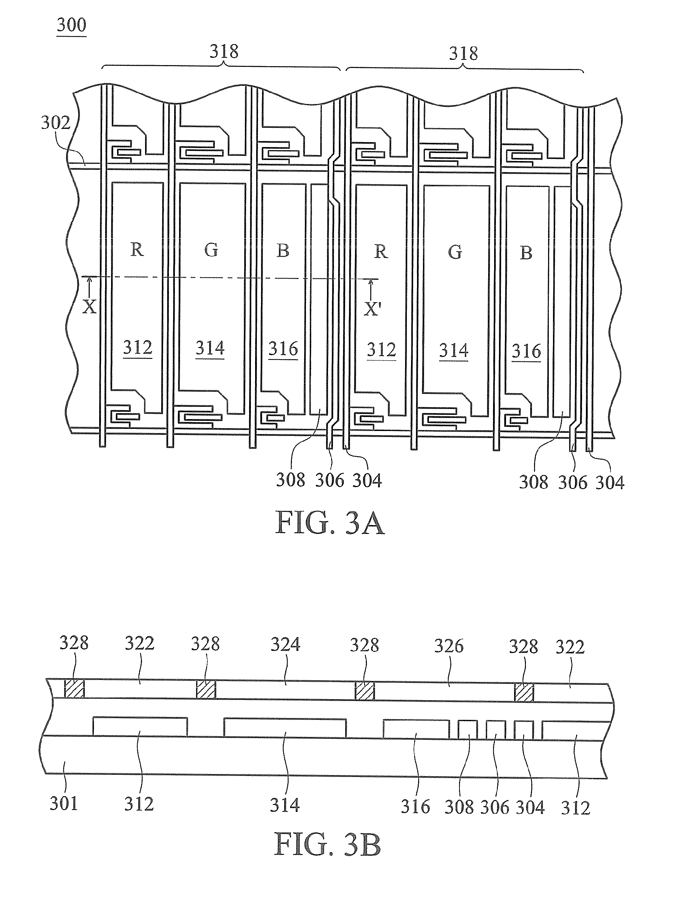

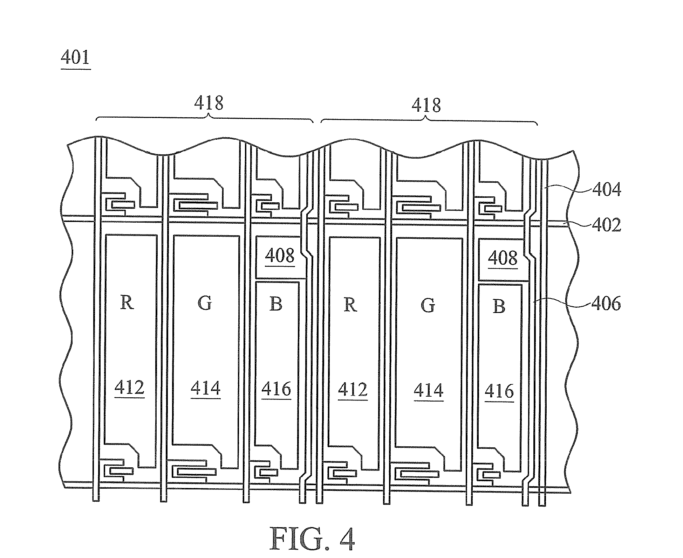

FIG. 3A shows an elementary top view of a liquid crystal panel including embedded elements of the first embodiment of the present invention, and FIG. 4 shows an elementary top view of a liquid crystal panel including embedded elements of the second embodiment of the present invention. In the first embodiment of the liquid crystal panel device 300, a plurality of gate lines 302 extend along a direction, and a plurality of data lines 304 intersect with the gate lines 302 to define a plurality of sub pixel regions. The readout line 306 parallel with the data line 304 is electrically connected to the embedded element 308. The so-called sub pixel region or sub-pixel area indicates the open region of the sub pixel except the opaque region. In a typical liquid crystal panel, the open regions are covered with red, green or blue filter layer respectively to form a red sub pixel 312, a green sub pixel 314 and a blue sub pixel 316 for color display. The red, green and blue sub pixels constitute a pixel region 318. The size of the red, green and blue filter layer are corresponding to the size of red, green and blue sub pixels, respectively. People skilled in the art should appreciate that the area of the sub pixel has scale relations with area of the filter layer thereon. It is understood that the area ratio of all the red, green and blue sub pixels is the same as the area ratio of the red, green and blue sub pixels in a pixel.

The different aperture ratio for each color sub pixels is provided in the present invention according to backlight spectrum, for the purpose that the embedded elements in an array do not affect color and brightness performance. Assume the area of the inlet area is 0.5 and the largest area of the monochromatic sub pixel is 1, the other two sub pixels must have an area less than 1, but greater than 0.5. Preferably, when the area of the largest sub pixel is 1, the area ratio of the other two sub pixels is 0.7 : 0.8, but is not limited thereto. The each monochromatic sub pixel may have different size with the wide of the sub pixel opening along the direction x (the direction along gate lines) if the distance between adjacent gate lines is fixed. Referring to FIG. 3B, the area ratio of the sub pixels in a pixel is proportioned to the length of the sub pixel along direction x.

FIG. 3B shows a cross-section view along X-X' of FIG. 3A. The liquid crystal panel device 300 according to the first embodiment of the present invention comprises a bottom glass substrate 301, and two adjacent gate lines 302 and two adjacent data lines 304 surrounding a sub pixel region. The gray level of each sub pixel is required to be changed independently and assembled a display frame of a liquid crystal panel. Therefore, each pixel electrode, such as 312, 314 and 316, is individual, expanding in two dimensional to form an array, and is configured to have the corresponding filter layer, such as the red filter layer 322, the green filter layer 324 and the blue filter layer 326, respectively. The black matrix 328 located among the adjacent filter layers can be formed of opaque materials, so that the thin film transistors underneath do not to be irradiated by an ambient light. FIG. 3B solely shows a sketch figure of elementary embedded element 308 in a liquid crystal panel device, however, the embedded element 308 can be completely within the black matrix or has a portion in the black matrix. Alternatively, the embedded element 308 can also be disposed under a filter layer, a transparent layer, such as a planarization layer, or under an opening, but is not limited thereto.

In the second embodiment of the liquid crystal panel device 401 shown in FIG. 4, a plurality of gate lines 402 extend along a direction, and a plurality of data lines 404 intersect with the gate lines 402 to define a plurality of sub pixel regions. The readout line 406 parallel with the data line 404 is electrically connected to the embedded element 408. Referring to the sub pixel 416 in FIG. 4, the each monochromatic sub pixel may have different size with the length of the sub pixel opening along the direction y (the direction along data lines) if the liquid crystal panel device has the same distance between adjacent data lines. It is also acceptable to adjust two dimensional length of the sub pixel opening, as the sub pixel 414 showed.

Table 1 shows the results of the experimental examples and the comparative examples described above of the present invention.

| | Expermental Example 1 | Expermental Example 2 | Comparative Example 1 | Comparative Example 2 | Target Value |
|---|---|---|---|---|---|
| Brightness | -8.98% | -11.54% | -15.73% | -5.32% | |
| decreasing ratio | | | | | |
| white chromaticity coordinate x value | 0.3128 | 0.3123 | 0.2922 | 0.3133 | 0.313 |
| white chromaticity coordinate y value | 0.3311 | 0.3301 | 0.3305 | 0.3462 | 0.329 |
| Δx | 0 | 0 | 0.0208 | 0 | - |
| Δy | 0.0021 | 0.0011 | 0.0015 | 0.0172 | - |
| Corresponding backlight spectrum chromaticity x coordinate | 0.304 | 0.322 | 0.341 | 0.270 | - |
| Corresponding backlight spectrum chromaticity y coordinate | 0.264 | 0.278 | 0.301 | 0.241 | - |

Referring to the target value in Table 1, provided a reference value of white point chromaticity coordinate when the typical panel leave the factory, and all current panels are required to achieve this standard white point chromaticity coordinate (0.313, 0.329). Take the typical panel for example, the endurable variation in the white point chromaticity is about 0.002∼0.003. When a white point chromaticity is out of the above endurable range, the white balance of the panel will be deviated such that the color appearance of pictures displayed by the panel is also shift.

The below experimental examples and comparative examples result from innumerable test taking account to CIE 1931 standard illuminant data and following the method illustrated in FIG. 5. The examples are illustrated to further show the features and virtues of the present invention. It is noted that the examples are only to illustrate features of the invention, but are not to limit the scope of the invention.

### Experimental Example 1 red sub-pixel area : green sub-pixel area : blue sub-pixel area = 0.8 : 1 : 0.7

Supposed each sub pixel size without occupied by additional embedded element is 1 (100%), and the predetermined size of the embedded element (referred shortly as the inlet region in the description below) is substantially 0.5. The color coordinate of Y is influenced most strongly by the green sub pixel among the tri-chromatic sub pixels, thus designing an inlet region occupied the red sub pixel and the blue sub pixel are 20% and 30%, respectively. In other words, the aperture ratio of the green sub pixel is constant, but the size of the red sub pixel and the blue sub pixel are 0.8 and 0.7, respectively. In according to the flow diagram of FIG. 5, the brightness level and the chromaticity coordinate are measured, and the x coordinate deviation (Δx) or the y coordinate deviation (Δy) is calculated by the difference between the measured and the target value chromaticity coordinate, as shown in Table 1. The calculated result of Δx is 0.0002, but shown as zero due to under the tolerant limit, and Δy is 0.002.

### Experimental Example 2 red sub-pixel area : green sub-pixel area : blue sub-pixel area = 0.7 : 1 : 0.8

When an inlet region occupies the original blue sub pixel and the original red sub pixel are 20% and 30%, respectively. In other words, the aperture ratio of the green sub pixel is constant, but the sub pixel size of the red and the blue sub pixels are 0.7 and 0.8, respectively. The brightness level and the chromaticity coordinate are measured, and the x coordinate deviation (Δx) or the y coordinate deviation (Δy) is determined, as shown in Table 1. The calculated result of Δx is 0.0007, but shown as zero due to under the tolerant limit, and Δy is 0.001.

### Comparative Example 1 red sub-pixel area : green sub-pixel area : blue sub-pixel area = 0.5 : 1 : 1

The inlet region is merely disposed in the red sub pixel region, as described in background of the invention, hence the area size of the red sub pixel is 0.5 and the aperture ratios of the blue sub pixel and the green sub pixel are constant. The brightness level and the chromaticity coordinate are measured, and compared with the target value to get the Δx and the Δy, as shown in Table 1. The result of Δy is 0.0015, and the Δx is 0.021, which Δx exceeded seriously the tolerant limit (0.002∼0.003).

### Comparative Example 2 red sub-pixel area : green sub-pixel area : blue sub-pixel area = 1 : 1 : 0.5

The inlet region is merely disposed in the blue sub pixel region, as described in background of the invention, hence the area size of the blue sub pixel is 0.5 and the aperture ratios of the red sub pixel and the green sub pixel are constant. The brightness level and the chromaticity coordinate are measured, and compared with the target value to get the Δx and the Δy, as shown in Table 1. The result of Δx is 0.001, and Δy is 0.017, which Δy exceeded seriously the tolerant limit.

Referring to Table 1, in the monochromatic color sub pixel is occupied by inlet region, shown as the comparative example 1 and the comparative example 2, chromaticity coordinate is deviates seriously the target value (0.313, 0.329), even if the backlight spectrum is adjusted. In contrast, the chromaticity coordinate of experimental examples (both the example 1 and example 2) by adjusting at least two color sub pixels according to the adjustable backlight spectrum is approaching to the target value.

The two experimental examples are used for explanatory, therefore, other occupancy ratio of the inlet region where the chromaticity coordinate close to the target value under the adjustable backlight spectrum is concluded. People in the art should select the condition having the lowest brightness loss and best color performance within the adjustable range of the backlight spectrum. The invention only shows examples adjusting the area of red and blue sub pixels, however, people skilled in the art can select at least two colors sub pixel to get better color and brightness performance, because individual sub pixel will contribute to color performance. Furthermore, the size of the inlet region will be changed with respect to its function and technology. The embodiment described is only used to illustrate the present invention, people skilled in the art can easily understand other advantages and effects of the invention.

When studying the above disclosure, a person skilled in the art will become aware of suitable technologies and manufacturing processes for materially producing the liquid crystal device or panel with an embedded element according to the present invention.

While the invention has been described by way of example and in terms of the preferred embodiments, it is to be understood that the invention is not limited to the disclosed embodiments. It is intended to cover various modifications and similar arrangements (as would be apparent to those skilled in the art). Therefore, the scope of the appended claims should be accorded the broadest interpretation so as to encompass all such modifications and similar arrangements.

## Claims

1. A liquid crystal panel device (300; 400) with an embedded device, comprising:
a pixel comprising at least three sub pixels (312, 314, 316; 412, 414, 416), the sub pixels comprising a first sub pixel, a second sub pixel and a third sub pixel;
an embedded element (308; 408), wherein the area of the sub pixels occupied by the embedded element is A, the area of the first sub pixel occupied by the embedded element is A₁, the area of the second sub pixel occupied by the embedded element is A₂, the area of the third sub pixel occupied by the embedded element is A₃, the sum of A₁, A₂ and A₃ equals A, and at least two of A₁, A₂ and A₃ are not zero.

2. The liquid crystal panel device as claimed in claim 1, wherein the first sub pixel is red, the second sub pixel is green and the third sub pixel is blue.

3. The liquid crystal panel device as claimed in claim 1 or 2, wherein each of A₁, A₂ and A₃ is not equal to the others.

4. The liquid crystal panel device as claimed in any of the preceding claims, wherein A is less than 50% of area of any of the sub pixels.

5. The liquid crystal panel device as claimed in any of the preceding claims, wherein A₁ is substantially equal to 30%, A₂ is substantially equals to 0% and A₃ is substantially equal to 20%.

6. The liquid crystal panel device with an embedded device as claimed in any of the preceding claims, wherein each of which displays light with different wavelength and has different size.

7. The liquid crystal panel device as claimed in claim 6, wherein the each sub pixel is formed by surrounding the two adjacent gate lines and two adjacent data lines.

8. The liquid crystal panel device as claimed in claim 7, further comprising a readout line parallel with the data lines and an embedded element electrically connecting the readout line.

9. The liquid crystal panel device as claimed in any of claims 6 to 8, wherein each sub pixel width between adjacent two data lines in a pixel is different.

10. A method for manufacturing a liquid crystal panel (300; 400) with an embedded element as claimed in any of the preceding claims, the liquid crystal panel is essentially consisted of a plurality of pixels and the pixel includes at least three sub pixels in which has different color, comprising:
a) providing an adjustable backlight spectrum range;
b) determining an area ratio of respective sub pixels occupied by an embedded element in each pixel according to a specific backlight spectrum;
c) calculating a white chromaticity coordinate of the liquid crystal panel and a deviation between the white chromaticity coordinate and a target chromaticity coordinate;
d) conforming the deviation is under a tolerant limit; and
e) configuring the embedded element in each pixel in response to the area ratio and the specific backlight spectrum.

11. The method as claimed in claim 10, wherein the three sub pixels comprise a red sub pixel, a green sub pixel and a blue sub pixel.

12. The method as claimed in claim 10 or 11, wherein the step of b) may be only distributing the area ratio of red and blue sub pixels occupied by the embedded element, but the embedded element does not occupy area of the green sub pixel.

13. The method as claimed in any of claims 10 to 12, wherein the adjustable backlight spectrum range is a backlight intensity range adjusted at a specific wavelength.

14. The method as claimed in any of claims 10 to 13, further comprising step d1) of minimizing brightness loss caused from the embedded element occupying a partial area of the pixel.

15. The method as claimed in any of claims 10 to 14, wherein the embedded element is a photo sensitive element or a pressure sensitive element.
